# EUROPEAN PATENT SPECIFICATION

(11) **EP 1 791 455 B1**
(45) Date of publication and mention of the grant of the patent: **07.09.2016**
(21) Application number: 05760755.8
(22) Date of filing: 21.07.2005
(51) Int. Cl.: A47J 43/044, A47J 43/07, A47J 43/042

(54) **CORDLESS MIXER**
KABELLOSES RÜHRGERÄT
BATTEUR SANS FIL

(30) Priority: 09.08.2004 AU 2004904425
(43) Date of publication of application: 06.06.2007
(73) Proprietor: Wilson, Ian Geoffrey, Cheltenham NSW 2119 (AU)
(72) Inventor: Wilson, Ian Geoffrey, Cheltenham NSW 2119 (AU)
(74) Representative: EP&C
(86) International application number: PCT/AU2005/001063
(87) International publication number: WO 2006/015403

(56) References cited:
- EP-B1- 0 283 642
- DE-A1- 19 635 223
- GB-A- 850 891
- US-A- 3 333 825
- US-B1- 6 398 403
- US-S1- D 456 206

## Description

The present invention relates to appliances for the mixing and blending of ingredients and, more particularly to hand held cordless mixers.

### BACKGROUND

Handheld mixers, sometimes called "stick mixers", are a popular kitchen appliance, being quick and easy to use, particularly for the mixing of drinks and other liquid ingredients, as well as for the chopping up of small quantities of nuts, making biscuit crumbs and the like. A handheld mixer is described in DE 196 35 223 A1.

A disadvantage of typical hand held mixers is the restrictions placed on their use through the connection of the power cord to a power outlet, forcing a user to operate the device in an area adjacent the outlet.

There is also a risk that the cord will catch on other articles and containers, causing these to spill or fall off a kitchen bench. The cord also is a nuisance for storage, likely to catch on other articles as it is extracted from a cupboard.

Furthermore there is usually no convenient way of storing the appliance when not in use. When used frequently, such as for drinks in households with young children, the length of the appliance and its attached cord make it an inconvenient item to be left readily accessible on a kitchen bench.

A more serious disadvantage is that hand held mixers operating from mains power, constitute an inherent danger to a user if not handled with care. The cord presents a danger if the mixer is used over a hot stove for the stirring of soup for example. When used to stir or blend ingredients in large containers there is a risk of electrocution if the mixer is accidentally dropped into the container. Furthermore, there is a tendency, even in those mixers which allow the blades to be removed for cleaning, to run the mixer in deeper washing up water, again with a serious risk of electrocution if the appliance is accidentally dropped.

These risks are of course accentuated when these appliances are used by children. In particular, stick mixers commonly employ a thin metal blade which can cause serious lacerations to curious fingers.

As well as constituting a safety issue, this type of blade is not well suited to certain blending and mixing applications, in particular the mixing of milk shakes and "smoothies" (milk-based drinks with fruit, usually a banana). These are typically prepared in relatively small quantities but the action of typically bladed stick mixers is so violent in a small container, as to risk ejecting the mixture.

There have been problems with developing cordless mixers which have sufficient on-board power to satisfactorily perform the functions for which such mixers are most often used, yet which are not so bulky or heavy as to make them awkward to use. High density batteries such as nickel metal hydride and the more recently developed lithium iron and lithium polymer batteries are not really suitable, since these appliances require a rapid discharge profile as well as a high energy density.

It is an object of the present invention to address or at least ameliorate some of the above disadvantages.

### BRIEF DESCRIPTION OF INVENTION

Accordingly, in a broad form of the invention there is provided a power unit as defined in claim 1.

Preferably, said power unit and a detachable extension unit when assembled together are adapted for mixing food ingredients by rotation of a blade assembly.

### BRIEF DESCRIPTION OF DRAWINGS

Embodiments of the present invention will now be described with reference to the accompanying drawings wherein:
Figure 1 is a perspective view of a cordless mixer assembly comprising a power unit and a blade extension unit according to a first preferred embodiment of the invention, Figure 2 is a sectioned view of the cordless mixer assembly of Figure 1
Figure 3 is a perspective view of the power unit disassembled from the cordless mixer assembly of Figure 1,
Figure 4 is a perspective view of the cordless mixer of Figures 1 and 2, disassembled and placed in a base module,
Figure 5 is a side elevation view of the mixer components and a mixing jug for use with said mixer.
Figure 6 is a perspective view of the lower end of a further preferred embodiment of a blade extension unit.
Figures 7, to 10 are detailed views of blade configurations for use in the blade extension unit of Figure 6.

### DETAILED DESCRIPTION OF PREFERRED EMBODIMENTS

### First Preferred Embodiment

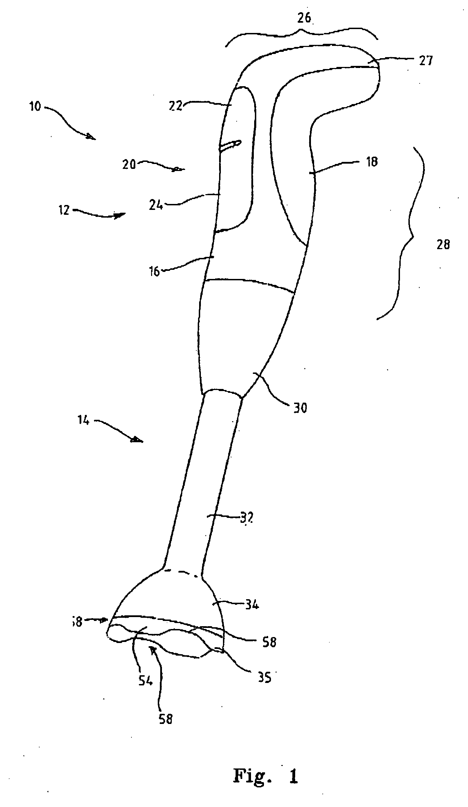

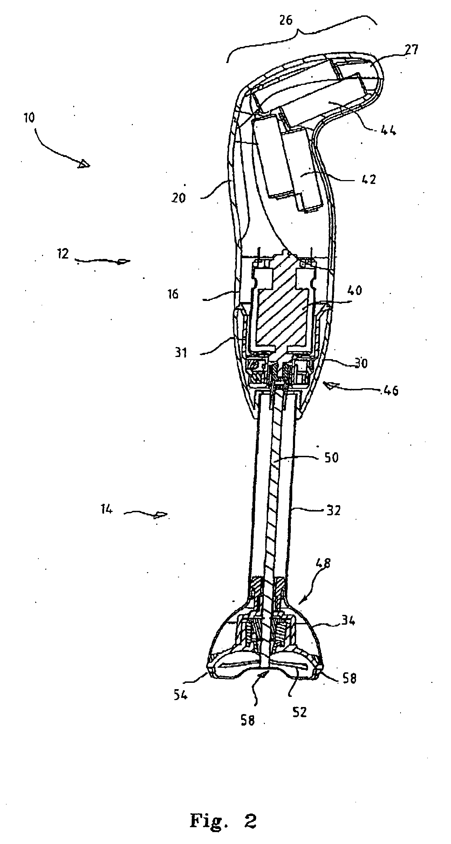

With reference to Figures 1 and 2, a cordless mixer 10 according to a first preferred embodiment of the invention comprises a power unit 12 releasably attached to a blade extension unit 14.

Power unit 12 comprises a body formed of a suitable high impact injection moulded plastic provided with a soft grip portion 18 and, in at least one preferred embodiment, a flexible control pad portion 20 at the front of power unit 12. Control pad portion 12 is preferably divided into two zones so that an upper portion 22 is adapted to control an on/off switch and the lower portion 24 is adapted to control a variable speed switch. Both switches (not shown) are arranged behind the flexible control pad portion 20 so that they may be manipulated through the flexible pad by the fingers of a grasping hand (not shown). Alternatively, control of power unit 12 may be provided by suitable switches mounted in the surface of the front of lower body portion 28.

The upper part of power unit 12 is formed with a projecting upper body portion 26 extending rearwardly and, preferably, at an angle from lower body portion 28, shaped so that the underside of the upper body portion nestles comfortably against a hand of a user, thereby helping to securely support the mixer in use.

As can be seen in Figure 2, power unit 12 includes a drive motor 40 and first and second battery clusters 42 and 44. By splitting the battery capacity into two sections in this way, sufficient power capacity can be provided without the power unit becoming awkwardly large either in girth.or in length. Battery power may by means of this configuration, be supplied by standard conventional and economical rechargeable nickel cadmium cells.

In preferred embodiments of the invention, the cells may either be eight AA size cells to deliver 9.6V or ten AA cells for 12V. For a 9.6V system each battery cluster 42 and 44 comprise four cells, while for the 12V system, battery cluster 44 comprises six cells. For this version the cap 27 of upper portion 26 may be somewhat higher to accommodate the larger number of cells. Cap 27 is arranged so as to be removable from upper body portion 26 to allow for the replacement of the battery clusters should this become necessary. Preferably, the two clusters may be arranged in a holding rack providing electrical contact between the two clusters and allowing the clusters to be inserted and extracted as a single power module.

Blade extension unit 14 comprises an attachment housing 30, an elongate hollow member 32 and a blade assembly housing 34. Attachment housing 30 is attached to power unit 12 by any suitable means such as for example catch mechanisms adapted to engage with detents provided in a projecting cylindrical portion 31 of the power unit 12, or a bayonet type of arrangement (not shown). Preferably, attachment housing 30 is made of the same impact resistant plastic as that used for power unit 12.

As can be seen in Figure 2, attachment housing 30 is provided with a lower shaft bearing 48. Bearing 48 supports drive shaft 50, which carries a typical mixer blade 52 at its lower end. Drive shaft 50 engages with the output shaft of motor 40 at its upper end.

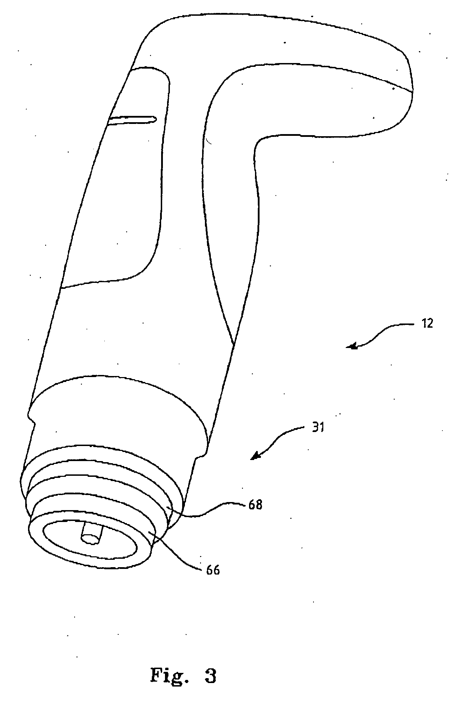

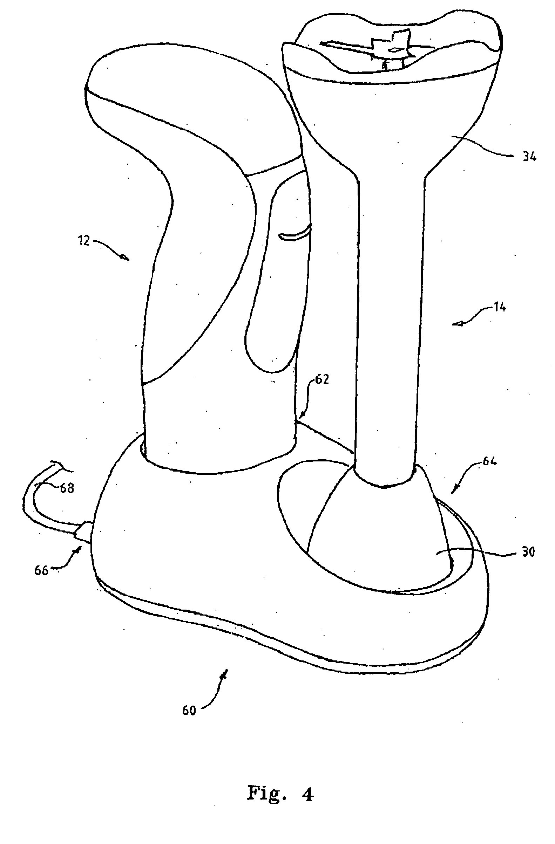

With reference now to Figures 3 and 4, power unit 12 and blade extension unit 14, when separated, may be stored in a flat bottomed base module 60 adapted for support on a horizontal surface such as a bench top or cupboard shelf. Base module 60 is provided with a power unit well 62 and a blade extension unit well 64. Each well is arranged with its axis substantially vertical so as to maintain power unit 12 and extension unit 14 in vertical positions when inserted. Power unit well 62 is provided with positive and negative electrical contacts (not visible) arranged to engage with respective conductive rings 66 and 68 arranged at the end of cylindrical portion 31 of power unit 12. Lower ring 66 is of a smaller diameter than upper ring 68. Conductive rings 66 and 68 in turn are connected to the battery clusters 42 and 44.

The electrical contacts in power unit well 62 are connected to a power socket 67 at the rear of base module 60, adapted to receive a power cord 69. Power cord 69 is provided with direct current from a suitable transformer (not shown) connected to a mains power outlet. Alternatively, in at least one preferred embodiment, the transformer is built into the base module 60.

Blade extension unit 14 is maintained in well 64 in a vertical position by sliding over a central upwardly projecting boss (not visible) of similar configuration as the cylindrical portion 31 of power unit 12.

### Second Preferred Embodiment

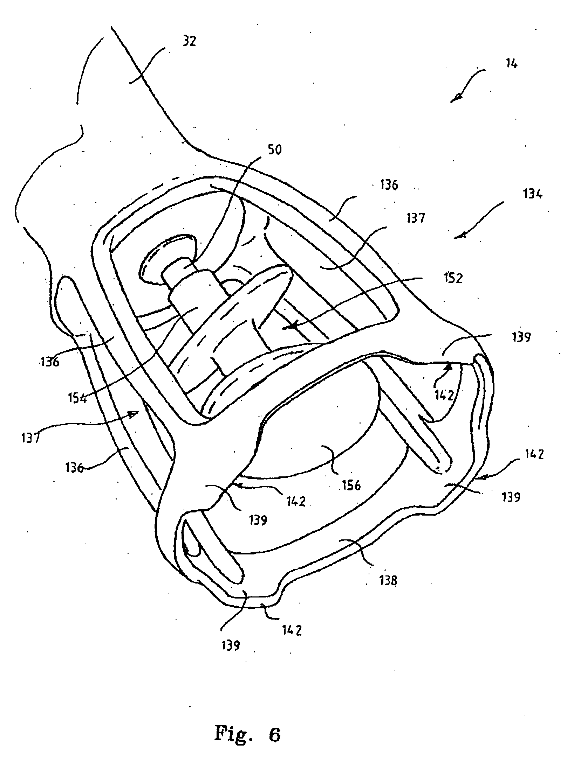

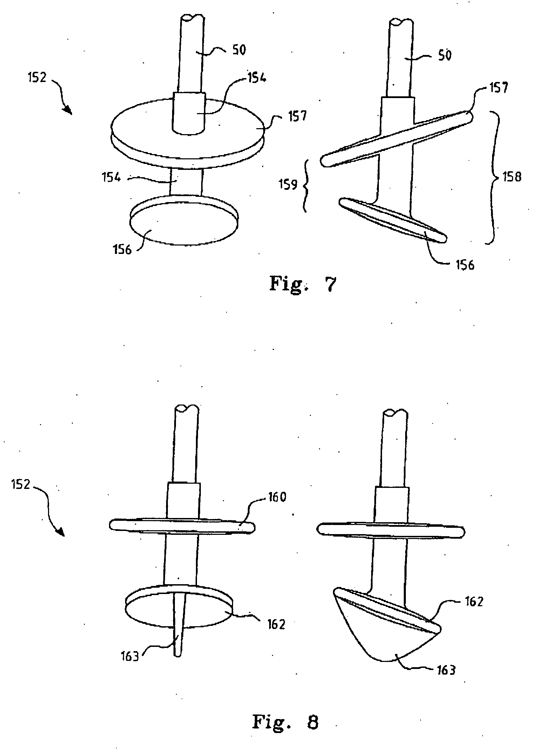

With reference now to Figures 6, in a particularly preferred embodiment of the invention, the blade extension unit 14 is provided at its distal end with a protective open cage 134 formed of struts 136 and skirt 138. A blade assembly 152 is attached to the end of drive shaft 50 and is adapted to rotate within the confines of open cage 134. Blade assembly 152 may take a number of forms as shown in Figures 7 to 10, but includes a central shaft 154 and at least one angled disc element 156.

Skirt 138 is formed with downwardly projecting elements 139, leaving between therm raised arches or crenellations 140 such that when the mixer is resting on, or is pushed vertically down onto the bottom of a container, fluids may pass under arches 140, as well as through openings 137 between struts 136. Preferably, downwardly projecting elements 139 are formed with relatively sharp edges 142 which can assist in breaking up lumps of material, such as for example pieces of banana or other fruit, to assist in the mixing action of the blade assembly.

Cage 134 and blade assembly 152 are configured so as to leave reasonable clearance between the periphery of the rotating discs of the assembly and the struts of the cage. This, together with the general bell shape of the cage, allows a user to bring the mixing action close to the sides of a container but precludes contact between the blade assembly and the container.

Blade assembly 152 is preferably formed of a relatively flexible plastic and with rounded edges so that the risk of laceration of fingers inadvertently inserted is at least reduced.

In those preferred embodiments of the blade assembly, discussed in more detail below, which have a lower angled dis.c element, that element rotates in close proximity to the level of the downwardly projecting elements 139. Thus when the mixer is in contact with the bottom of a container, the disc element continually compresses liquid and solid elements of the mixture between the bottom and the disc.

In a first preferred configuration of blade assembly 152 shown in Figure 7, the assembly includes two oppositely angled discs integrally moulded to shaft 154, a lower disc 156 and upper disc 157. As the discs rotate through a mixture, fresh portions are drawn in between the widely separated regions of the discs 158, compressed and ejected from between the narrowing regions 159.

In a second preferred embodiment of the blade assembly 152 shown in Figure 8, the axis of the upper disc 160 is coincident with the axis of shaft 154. In this embodiment the lower angled disc 162 is provided with a mixing blade 163 projecting from the underside of the disc. This blade rotates in close proximity to the bottom of a container when the skirt 138 is in contact with the bottom and is particularly useful in the mixing of heavier ingredients.

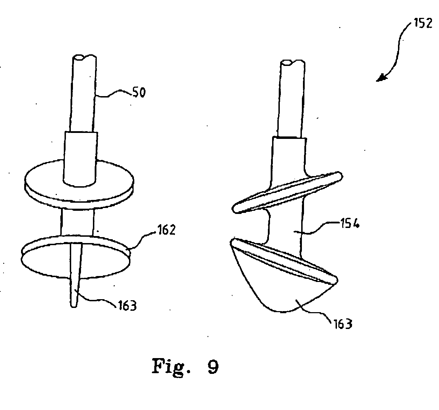

In a third preferred configuration of the blade assembly 152 shown in Figure 9, both the upper and lower discs are oppositely angled and the lower disc provided with a mixing blade as previously described.

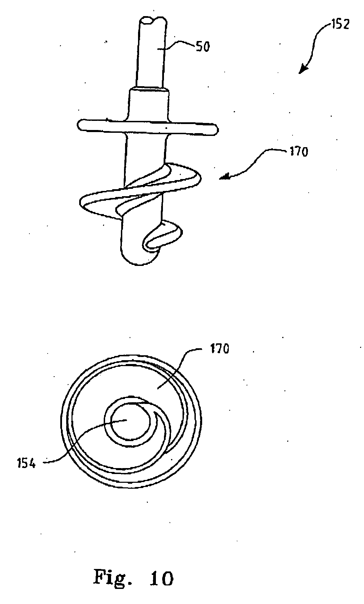

In a fourth preferred configuration of the blade assembly as shown in Figure 10, the assembly comprises a single upper disc with its axis coincident with the axis of shaft 154. A tapering Archimedes screw is provided for a portion of the lower end of shaft 154. During rotation of blade assembly 152, the screw drives mix ingredients firstly downward and then outward.

### In Use

When the cordless mixer of the present invention has been charged in the base module, the power unit is attached to the extension unit.

After use, the extension unit may be detached from the power unit and the power unit placed into its well in the base module. The battery clusters of power unit 12 are then recharged and maintained in a charged condition while ever the power unit is so stored in the base module and the module connected to a power source. After washing, the extension unit is also placed in the base module, the arrangement providing convenient bench top storage while not in use.

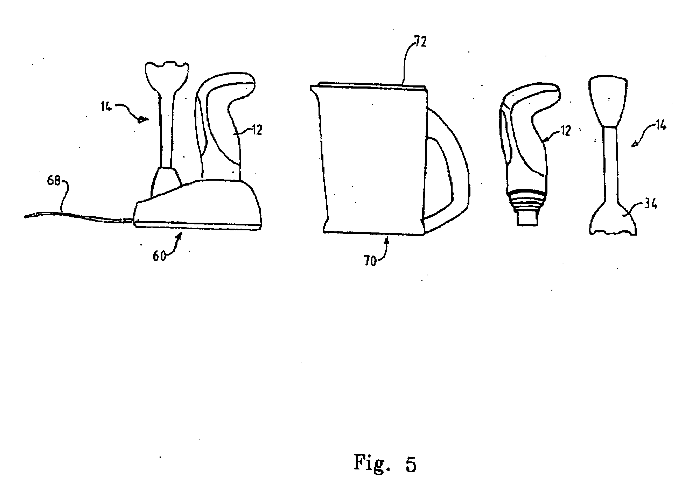

The mixer of the present invention may be supplied with auxiliary equipment such as for example a mixing jug 70 as shown in Figure 5. Jug 70 is provided with a splash guard lid 72. In at least one preferred embodiment of the invention, lid 72 may be adapted to support the mixer assembly in a vertical position within the jug so that the skirt 35 of bell housing 34, or the skirt 138 of open cage 134 is in.light contact with the base of the jug.

The above describes only some embodiments of the present invention and modifications, obvious to those skilled in the art, can be made thereto without departing from the scope of the present invention as defined in the claims. Thus although the description of the preferred embodiment of the invention is with reference to a mixer for liquid ingredients, the principles of a cordless power unit and a detachable extension which may be supported in a base module, may also be applied to other kitchen appliances, such as an electric knife for example.

## Claims

1. A power unit (12) for a cordless handheld mixer (10); said power unit comprising an enclosure containing an electric motor (40), at least one rechargeable power source and a power control system; said power unit accomodating first and second rechargeable battery clusters (42,44); wherein said enclosure comprises a lower body portion and an upper body portion extending from said lower body portion; said first rechargeable battery cluster being disposed within said lower body portion; and wherein said second rechargeable battery cluster is disposed within said upper body portion; **characterized in that** said lower body portion (28) is shaped for grasping by the hand of a user, and wherein said projecting upper body portion (26) is angled relative to said lower body portion; said upper body portion arranged to nestle against said hand grasping said lower body portion.

2. A power unit according to claim 1, wherein each of said first and second battery clusters comprises AA size battery cells.

3. A power unit according to claim 2, wherein said battery cells are rechargeable battery cells.

4. A power unit according to one of claims 1-3, wherein each of said first and second battery clusters comprises four AA size battery cells.

5. A power unit according to one of claims 1-3, wherein said first and second battery clusters comprise four and six AA size battery cells respectively.

6. A power unit according to one of the preceding claims, wherein said power unit is detachable from a blade extension unit.

7. A power unit according to one of the preceding claims, wherein said power unit is provided with an on/off switch and a speed control switch.

8. A power unit according to claim 7, wherein said on/off switch and said speed control switch are mounted within said lower body portion behind a portion of said body formed of a flexible material such that said on/off switch and said speed control switch may be operated by pressure applied with the fingers of said hand grasping said lower body portion.

## Patentansprüche

1. Eine Leistungseinheit (12) für einen kabellosen Handmixer (10); wobei die Leistungseinheit ein Gehäuse enthaltend einen elektrischen Motor (40), zumindest eine wiederaufladbare Energiequelle und ein Energiekontrollsystem umfasst; wobei die Leistungseinheit erste und zweite wiederaufladbare Batteriecluster (42, 44) aufnimmt; wobei das Gehäuse einen unteren Körperteil und einen sich von dem unteren Körperteil erstreckenden oberen Körperteil umfasst; wobei der erste wiederaufladbare Batteriecluster in dem unteren Körperteil angeordnet ist; und wobei der der zweite wiederaufladbare Batteriecluster in dem oberen Körperteil angeordnet ist; **dadurch gekennzeichnet, dass** der untere Körperteil (28) zum Greifen durch die Hand eines Benutzers geformt ist, und wobei der vorstehende obere Körperteil (26) relativ zu dem unteren Körperteil gewinkelt ist; wobei der obere Körperteil angeordnet ist, sich gegen die den unteren Körperteil greifende Hand zu schmiegen.

2. Eine Leistungseinheit gemäß Anspruch 1, wobei jeder der ersten und zweiten Batteriecluster Batteriezellen der Größe AA umfasst.

3. Eine Leistungseinheit gemäß Anspruch 2, wobei die Batteriezellen wiederaufladbare Batteriezellen sind.

4. Eine Leistungseinheit gemäß einem der Ansprüche 1 - 3, wobei jeder der ersten und zweiten Batteriecluster vier Batteriezellen der Größe AA umfasst.

5. Eine Leistungseinheit gemäß einem der Ansprüche 1 - 3, wobei der erste und zweite Batteriecluster vier beziehungsweise sechs Batteriezellen der Größe AA umfassen.

6. Eine Leistungseinheit gemäß einem der vorhergehenden Ansprüche, wobei die Leistungseinheit von einer Klingenaufsatzeinheit abnehmbar ist.

7. Eine Leistungseinheit gemäß einem der vorhergehenden Ansprüche, wobei die Leistungseinheit mit einem An/Aus-Schalter und einem Geschwindigkeitskontrollschalter versehen ist.

8. Eine Leistungseinheit gemäß Anspruch 7, wobei der An/Aus-Schalter und der Geschwindigkeitskontrollschalter in dem unteren Körperteil hinter einem Teil des Körpers geformt aus einem flexiblen Material befestigt sind, sodass der An/Aus-Schalter und der Geschwindigkeitskontrollschalter durch Druck ausgeübt mit den Fingern der den unteren Körperteil greifenden Hand betätigt werden können.

## Revendications

1. Unité de puissance (12) pour un mixeur à main sans fil (10) ; ladite unité de puissance comprenant une enceinte contenant un moteur électrique (40), au moins une source de puissance rechargeable et un système de commande de puissance; ladite unité de puissance logeant des premier et second blocs de piles rechargeables (42, 44) ; dans laquelle ladite enceinte comprend une partie de corps inférieure et une partie de corps supérieure s'étendant à partir de ladite partie de corps inférieure ; ledit premier bloc de piles rechargeables étant disposé à l'intérieur de ladite partie de corps inférieure ; et dans laquelle ledit second bloc de piles rechargeables est disposé à l'intérieur de ladite partie de corps supérieure ; **caractérisé en ce que** ladite partie de corps inférieure (28) est formée pour être saisie par la main d'un utilisateur, et dans laquelle ladite partie de corps supérieure en saillie (26) est coudée par rapport à ladite partie de corps inférieure ; ladite partie de corps supérieure étant agencée pour s'emboîter contre ladite main qui saisit ladite partie de corps inférieure.

2. Unité de puissance selon la revendication 1, dans laquelle chacun desdits premier et second blocs de piles comprend des piles de type AA.

3. Unité de puissance selon la revendication 2, dans laquelle lesdites piles sont des piles rechargeables.

4. Unité de puissance selon l'une des revendications 1 à 3, dans laquelle chacun desdits premier et second blocs de piles comprend quatre piles de type AA.

5. Unité de puissance selon l'une des revendications 1 à 3, dans laquelle lesdits premier et second blocs de piles comprennent quatre et six piles de type AA, respectivement.

6. Unité de puissance selon l'une des revendications précédentes, dans laquelle ladite unité de puissance est détachable d'une unité d'extension de lame.

7. Unité de puissance selon l'une des revendications précédentes, dans laquelle ladite unité de puissance est prévue avec un commutateur marche / arrêt et un commutateur de contrôle de vitesse.

8. Unité de puissance selon la revendication 7, dans laquelle ledit commutateur de marche / arrêt et ledit commutateur de contrôle de vitesse sont montés à l'intérieur de ladite partie de corps inférieure derrière une partie dudit corps formé avec un matériau flexible de sorte que ledit commutateur de marche / arrêt et ledit commutateur de contrôle de vitesse peuvent être actionnés par la pression appliquée par les doigts de ladite main qui saisit ladite partie de corps inférieure.
